# EUROPEAN PATENT APPLICATION

(11) **EP 4 806 560 A1**
(43) Date of publication of application: **16.09.2026**
(21) Application number: 26163974.4
(22) Date of filing: 11.03.2026
(51) Int. Cl.: B05C 1/00, B05C 11/10, B27D 5/00, B27G 11/00, G05D 24/00

(54) **SYSTEM FOR APPLYING GLUE IN EDGE BANDING GROUPS, GLUE APPLICATION UNIT, AND METHOD FOR CONTROLLING THE GLUE VISCOSITY**

(30) Priority: 12.03.2025 IT 202500005062
(71) Applicant: SCM Group S.p.A., 47921 Rimini (RN) (IT)
(72) Inventor: CAULI, Andrea, 47921 RIMINI (IT)
(74) Representative: Tiburzi, Andrea

(57) **Abstract**

The present invention relates to an application system (1) for applying glue (C) in plants, machines, or edge banding groups for pieces or panels, such as wood, plastic, plywood panels, and the like, comprising: a glue application unit (2) comprising a support frame (21), a glue tank (3) for containing glue (C), arranged in said support frame (21), and heating means (4) for heating said glue (C) contained in said glue tank (3); and a control unit (6) operatively connected to said heating means (4).

The present invention also relates to a method for controlling the viscosity of glue (C) in a panel edge banding machine.

## Description

The present invention relates to a system for applying glue in edge banding groups, glue application unit, and method for controlling the glue viscosity.

### Field of invention

More specifically, the invention concerns a system and a unit for applying glue of the aforementioned type, specifically designed and manufactured to allow optimal heating of the glue regardless of the type of glue used.

The following description will focus on the preparation and heating of glue for applying edges to wooden panels, but it is clear that it should not be considered limited to this specific use.

### Prior art

The glue pot is a key component of the gluing units in panel edge banding machines. Its function is to heat the glue and convey it to the work roller, which then applies it to the panel for edge banding.

In the traditional configuration, the glue temperature is determined by a sensor built into the side of the tank.

Generally, two types of glues can be distinguished: thermoplastic and thermosetting.

Thermoplastic glues, such as EVA, do not undergo chemical reactions when heated, which primarily serves to reduce their viscosity to allow for application.

Thermosetting glues, such as PU, base their curing process on crosslinking, driven by the presence of moisture and accelerated by high temperatures. Here too, heating serves the primary purpose of reducing viscosity.

This temperature-based viscosity control method presents some critical issues. First, the temperature recorded is that of the tank, not the glue inside it. This requires the additional variable of the heat transfer coefficient between the tank and the glue, which varies with the type of glue, the shape, and the material of the tank. Furthermore, changing the type of glue also requires changing the optimal working temperature, requiring validation and testing for each type of glue.

The design and validation process for glue pots requires extensive testing to ensure that the reported temperatures correspond to the state of the glue.

Furthermore, possible small production variations between individual glue pots can add up, leading to pots with different variations between the measured and actual glue temperature, with the risk of burning or not heating the glue adequately.

Based on the above, there is a perceived need in the field for a system that overcomes one or more of the problems indicated.

### Purpose of the invention

In light of the above, it is therefore the purpose of the present invention to provide a glue application system for edge banding units and not only that does not require manual calibration and the insertion of offsets between the measured and actual values.

Another aim of the invention is to simplify the process of setting the glue parameters, no longer requiring any user input or validation by the manufacturer.

It is also an object of the present invention to allow the use of different types of glue, including glues never tested before, without requiring additional tests or empirical parameters.

Another aim of the invention is to simplify the design and validation process of glue pots, eliminating the need for lengthy tests to verify the correspondence between reported temperatures and the actual state of the glue.

It is also the aim of the present invention to obtain a more reliable, robust system that is independent of environmental conditions and production variations between the individual glue tanks.

### Object of the invention

It is, therefore, object of the present invention an application system for applying glue in plants, machines, or edge banding groups for pieces or panels, such as wood, plastic, plywood panels, and the like, comprising: a glue application unit comprising a support frame, a glue tank for containing glue, arranged in said support frame, and heating means for heating said glue contained in said glue tank; and a control unit operatively connected to said heating means; **characterized** in that it comprises a viscosity sensor, arranged in contact with the glue contained in said glue tank, adapted to detect the viscosity of said glue; and in that said control unit is operatively connected to said viscosity sensor; wherein said control unit is programmed for:
- detecting the viscosity of the glue contained in said glue tank by means of said viscometer; and
- adjusting the heating means to decrease or increase the temperature of said glue contained in said glue tank based on the viscosity detected by said viscometer, so as to maintain the viscosity of said glue within a predetermined viscosity range.

Always according to the invention, said viscosity sensor may be positioned at the lower part of said glue tank.

Still according to the invention, said viscosity sensor may be a sensor without moving parts, configured to measure viscosity by identifying fluid damping at various frequencies.

Further according to the invention, said viscosity sensor may be configured to simultaneously measure both the viscosity and the temperature of the glue.

Advantageously according to the invention, said viscosity sensor may a Brookfield-type viscometer.

Preferably according to the invention, said viscometer may comprise a probe immersed in said glue.

Still according to the invention, said heating means may comprise funnel resistors and/or glue tank body resistors.

It is also object of the present invention a glue application unit, for applying glue in plants, machines, or edge banding groups for panels, such as wood, plastic, plywood panels, and the like, comprising: a support frame; a glue tank for containing glue, arranged in said support frame; and heating means for heating said glue contained in said glue tank; characterized in that it comprises a viscosity sensor, arranged in contact with the glue contained in said glue tank, adapted to detect the viscosity of said glue.

Always according to the invention, said viscosity sensor may be positioned at the lower part of said glue tank.

It is further object of the present invention, a method for controlling the viscosity of glue in an edge banding machine for panels, such as wood, plastic, plywood panels, and the like, by means of the application system described above, wherein said method comprises the steps of:
measuring the viscosity of the glue inside a glue tank by means of said viscosity sensor;
transmitting the measured viscosity data to said central control unit; and
controlling said heating means to vary the viscosity of said glue, so that it is maintained within a predetermined viscosity range.

Still according to the invention, the measuring of the viscosity of the glue may happen at the lower part of the glue tank.

Further according to the invention, said method may comprise the step of measuring the temperature of the glue along with the viscosity.

Advantageously according to the invention, said method may comprise the step of automatically adapting control parameters for different types of glue.

It is further object of the present invention a computer program comprising instructions that, when the program is executed by a computer, cause the execution by the computer of the steps of the method described above.

### Brief description of the figures

The present invention will be now described, for illustrative but not limitative purposes, according to its preferred embodiments, with particular reference to the figures of the enclosed drawings, wherein:
figure 1 illustrates a side view with a sectional part of an application system for applying glue, according to the present invention;
figure 2 illustrates a cross-sectional perspective of a portion of the application unit of the system of figure 1; and
figure 3 illustrates a side sectional view of the application unit of the system of figure 1, showing the internal configuration of the components.

### Detailed description

In the various figures, similar parts will be indicated with the same numerical references.

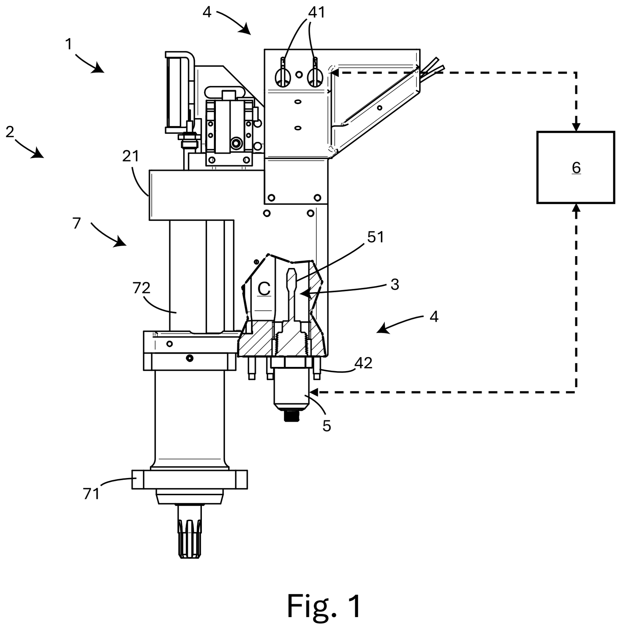

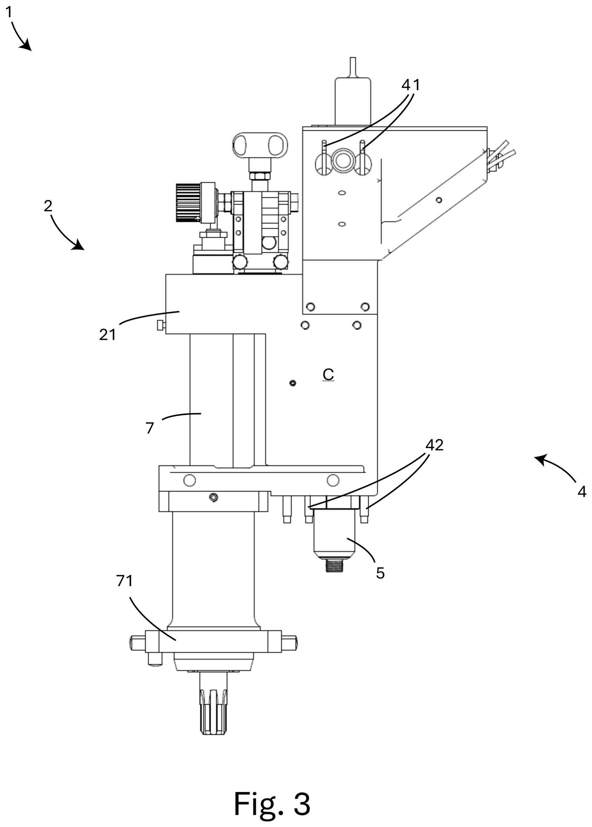

The application system 1 for the application of glue C or adhesives in general, in plants or machines for edge banding panels is illustrated in figures 1, 2 and 3.

The application system 1 comprises an application unit 2 and a control unit 6.

The application unit 2 comprises a support frame 21 that provides structural support for the various components. The support frame 21 can be coupled by suitable means to the edging assembly (not shown in the figures), which the application unit 2 is a part of.

The application unit 2 also comprises a glue tank 3 arranged inside the support frame 21 to contain the glue C. The glue tank 3 is positioned in the central section of the application unit 2, as shown in figure 1.

The application unit 2 also comprises heating means 4, positioned above and inside the glue tank 3 to heat the glue C contained therein.

The heating means 4 comprise funnel resistors 41 positioned in the upper part of the application unit 1, as illustrated in figure 1. Furthermore, the heating means 4 of the application unit 2 may comprise tank body resistors 42 arranged inside the glue tank 3.

As mentioned, the heating means 4 generally consist of electrical resistors.

The application unit 2 also comprises a viscosity sensor 5, positioned in the lower part of the glue tank 3, as shown in the figures.

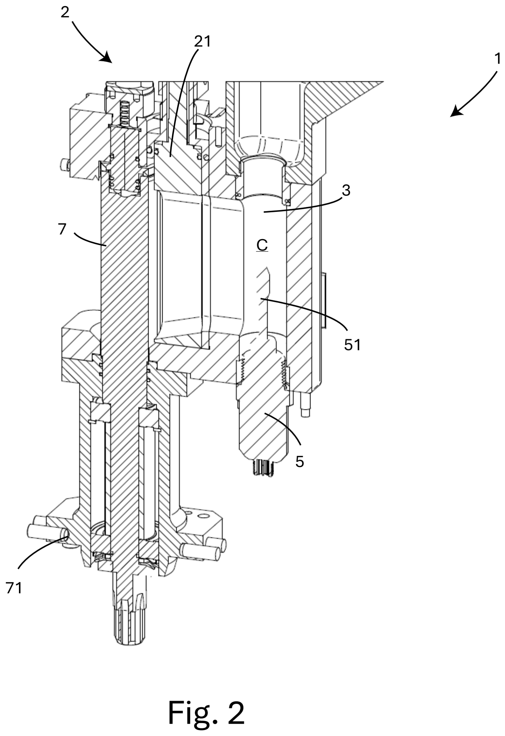

The viscosity sensor 5 may comprise a probe 51 that extends inside the glue tank 3 to measure the viscosity of the glue C in the central portion of the volume of the glue tank 3. The viscosity sensor 5 may be installed by adding a threaded hole in the lower part of the glue tank 3, as illustrated in figure 2. Therefore, said viscosity sensor 5 may also be applied to application units already on the market, as the adaptation is particularly easy.

The viscosity sensor 5 may be a sensor with no moving parts configured to measure the viscosity by identifying the damping of the fluid at various frequencies.

In other embodiments, the viscosity sensor 5 may be a Brookfield type viscometer which, in addition to measuring the viscosity, also allows the glue to be mixed in the glue tank 3.

In some embodiments, the viscosity sensor 5 can operate at temperatures up to 300°C and pressures up to 500 bar, and can measure viscosities in the range of 0.4 to 250,000 cP.

The application unit 2 comprises a vertically arranged applicator roller 7 having a knurled lateral surface 72 for retaining the glue on the surface to facilitate its application to the edge of a panel (not shown in the figures) extending upwards from the bottom of the support frame 2, as shown in figure 1. The applicator roller 7 also comprises a roller connecting support 71 arranged below.

The application unit 2 is operationally connected to said control unit 6. The functional connections are indicated by dashed lines in figure 1.

The control unit 6 receives input from the viscosity sensor 5 and controls the heating elements 4. The control unit 6 is programmed to:
- detect the viscosity of the glue C contained in the glue tank 3 using the viscosity sensor 5;
- adjust the heating elements 4 to reduce or increase the temperature of the glue C contained in the glue tank 3 according to the viscosity detected by the viscosity sensor 5, so as to maintain the viscosity of the glue C within a viscosity range *Δσ* predetermined.

The viscosity sensor 5 is configured to simultaneously measure the viscosity and, in some embodiments, the temperature of the glue C. In other embodiments, the temperature of the glue C may not be subject to measurement or detection.

The control unit 6 of the application system 1 can automatically adapt the control parameters for different types of glue without requiring manual input or validation. In fact, the control unit 6, thanks to the essentially real-time detection of the viscosity*σ*, and possibly in some embodiments, as mentioned, also of the temperature T of the glue C, can carry out a feedback or control feedback on the heating means 4. In particular, such feedback or control feedback can be carried out on the funnel resistors 41 and on the glue tank body resistors 42. In this way it is possible to maintain and adapt any specific glue C contained in the glue tank 3 in a viscosity range *Δσ* suitable for application using the applicator roller 7.

The applicator roller 7 will thus be able to spread a layer of glue C on the edge of the panel (not shown in the figures) of a thickness and viscosity suitable for preventing it from dripping and for allowing suitable drying times to carry out other working operations on the panel.

### Advantages

An advantage of the present invention is that it produces more reliable, robust, and environmental-independent edge banding units. Direct control of the glue viscosity eliminates the need for manual calibration and offsets between the measured and actual values, making the measurement process more repeatable.

Another advantage of this invention is that it eliminates the process of setting glue parameters, no longer requiring any input from the manufacturer. This makes it possible to independently use any type of glue, including cheaper glues, proprietary glues whose parameters are not shared, or specialty glues for niche applications.

Another advantage of this invention is that it simplifies the design and validation process for glue pots, eliminating the need for lengthy tests to verify that the reported temperatures correspond to the glue's state. This solution eliminates all variables, allowing the pots to be calibrated independently of their manufacturing process and the environmental conditions in which they are used.

Another advantage of this invention is that it allows the use of glues that have never been tested or validated before without having to perform any tests or enter parameters derived from empirical tests, making the system much more flexible and adaptable to different production needs.

Another advantage of the present invention is that it improves the homogeneity of the glue flow state, especially in the configuration that implements a Brookfield type viscometer that allows continuous mixing of the fluid inside the tank.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Application system (1) for applying glue (C) in plants, machines, or edge banding groups for pieces or panels, such as wood, plastic, plywood panels, and the like, comprising:
a glue application unit (2) comprising
a support frame (21),
a glue tank (3) for containing glue (C), arranged in said support frame (21), and
heating means (4) for heating said glue (C) contained in said glue tank (3); and
a control unit (6) operatively connected to said heating means (4);
**characterized**
**in that** it comprises a viscosity sensor (5), arranged in contact with the glue (C) contained in said glue tank (3), adapted to detect the viscosity of said glue (C); and
**in that** said control unit (6) is operatively connected to said viscosity sensor (5);
wherein said control unit (6) is programmed for:
- detecting the viscosity of the glue (C) contained in said glue tank (3) by means of said viscometer (5); and
- adjusting the heating means (4) to decrease or increase the temperature of said glue (C) contained in said glue tank (4) based on the viscosity detected by said viscometer (5), so as to maintain the viscosity of said glue (C) within a predetermined viscosity range (Δσ).

2. Application system (1) according to claim 1, **characterized in that** said viscosity sensor (5) is positioned at the lower part of said glue tank (3).

3. Application system (1) according to any one of the preceding claims, **characterized in that** said viscosity sensor (5) is a sensor without moving parts, configured to measure viscosity by identifying fluid damping at various frequencies.

4. Application system (1) according to any one of the preceding claims, **characterized in that** said viscosity sensor (5) is configured to simultaneously measure both the viscosity and the temperature of the glue (C).

5. Application system (1) according to any one of claims 1 or 2, **characterized in that** said viscosity sensor is a Brookfield-type viscometer (5).

6. Application system (1) according to any one of the preceding claims, **characterized in that** said viscometer (5) comprises a probe (51) immersed in said glue (C).

7. Application system (1) according to any one of the preceding claims, **characterized in that** said heating means (4) comprise funnel resistors (41) and/or glue tank body resistors (42).

8. Glue application unit (2), for applying glue (C) in plants, machines, or edge banding groups for panels, such as wood, plastic, plywood panels, and the like, comprising:
a support frame (21);
a glue tank (3) for containing glue (C), arranged in said support frame (21); and
heating means (4) for heating said glue (C) contained in said glue tank (3);
**characterized in that** it comprises a viscosity sensor (5), arranged in contact with the glue (C) contained in said glue tank (3), adapted to detect the viscosity of said glue (C).

9. Application unit (1) according to the preceding claim, **characterized in that** said viscosity sensor (5) is positioned at the lower part of said glue tank (3).

10. Method for controlling the viscosity of glue (C) in an edge banding machine for panels, such as wood, plastic, plywood panels, and the like, by means of the application system (1) according to any one of claims 1-7, wherein said method comprises the steps of:
measuring the viscosity of the glue (C) inside a glue tank (3) by means of said viscosity sensor (5);
transmitting the measured viscosity data to said central control unit (6); and
controlling said heating means to vary the viscosity of said glue (C), so that it is maintained within a predetermined viscosity range (Δσ).

11. Method according to the preceding claim, **characterized in that** it measures the viscosity of the glue (C) at the lower part of the glue tank (3).

12. Method according to any one of claims 10 or 11, **characterized in that** it comprises the step of measuring the temperature of the glue (C) along with the viscosity.

13. Method according to any one of claims 10-12, **characterized in that** it comprises the step of automatically adapting control parameters for different types of glue.

14. Computer program comprising instructions that, when the program is executed by a computer, cause the execution by the computer of the steps of the method according to any one of claims 10-13.
